(19) Europäisches Patentamt
European Patent Office
Office européen des brevets

(11) **EP 4 035 767 A1**

(12) **EUROPEAN PATENT APPLICATION**
published in accordance with Art. 153(4) EPC

(43) Date of publication:
**03.08.2022 Bulletin 2022/31**

(21) Application number: **20868989.3**

(22) Date of filing: **11.09.2020**

(51) International Patent Classification (IPC):
**B01J 2/16** (2006.01)  **F23D 14/02** (2006.01)
**F23D 14/48** (2006.01)  **F23D 14/58** (2006.01)

(52) Cooperative Patent Classification (CPC):
**B01J 2/16; F23D 14/02; F23D 14/22; F23D 14/48; F23D 14/58**

(86) International application number:
**PCT/JP2020/034507**

(87) International publication number:
**WO 2021/060027 (01.04.2021 Gazette 2021/13)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **26.09.2019 JP 2019175863**

(71) Applicant: **Taiyo Nippon Sanso Corporation Tokyo 142-8558 (JP)**

(72) Inventors:
- **HAGIHARA, Yoshiyuki**
  **Tokyo 142-8558 (JP)**
- **YAMAMOTO, Yasuyuki**
  **Tokyo 142-8558 (JP)**

(74) Representative: **HGF**
**HGF Limited**
**1 City Walk**
**Leeds LS11 9DX (GB)**

(54) **BURNER FOR MANUFACTURING INORGANIC SPHEROIDIZED PARTICLES, INORGANIC SPHEROIDIZED PARTICLE MANUFACTURING DEVICE, AND METHOD FOR MANUFACTURING INORGANIC SPHEROIDIZED PARTICLES**

(57) One object of the present invention is to provide a burner for producing inorganic spheroidized particles which can significantly reduce the amount of warming gas generated and suppress the generation of soot during combustion. The present invention provides a burner (1) for producing inorganic spheroidized particles, including a raw material powder supply path (2A) which supplies inorganic powder as raw material powder; a first fuel gas supply path (3A) which supplies a first fuel gas containing no carbon source; and a first combustion-supporting gas supply path (4A) which supplies a first combustion-supporting gas.

FIG. 2

**Description**

TECHNICAL FIELD

The present invention relates to a burner for producing inorganic spheroidized particles, an apparatus for producing inorganic spheroidized particles and a method for producing inorganic spheroidized particles.

BACKGROUND ART

Conventionally, a method for producing inorganic spheroidized particles (hereinafter, may be simply referred to as "spheroidized particles") by passing an inorganic powder raw material through a flame is known (Patent Documents 1 to 3).

For example, in an apparatus for producing inorganic spheroidized particles disclosed in Patent Document 2, as shown in FIG. 10, raw material powder is supplied from a raw material feeder (feeder) A and carried into a burner B with carrier gas supplied from a carrier gas supply device A'. Oxygen from an oxygen supply facility C and a fuel gas (liquefied petroleum gas: LPG) from a LPG supply facility D are supplied into the burner B. Then, an exhaust gas containing particles spheroidized in the flame in a vertical furnace E is cooled (temperature diluted) by air introduced from a passage F to the bottom of the vertical furnace E, and the spheroidized particles are collected by a cyclone G and a bag filter H in the subsequent stage.

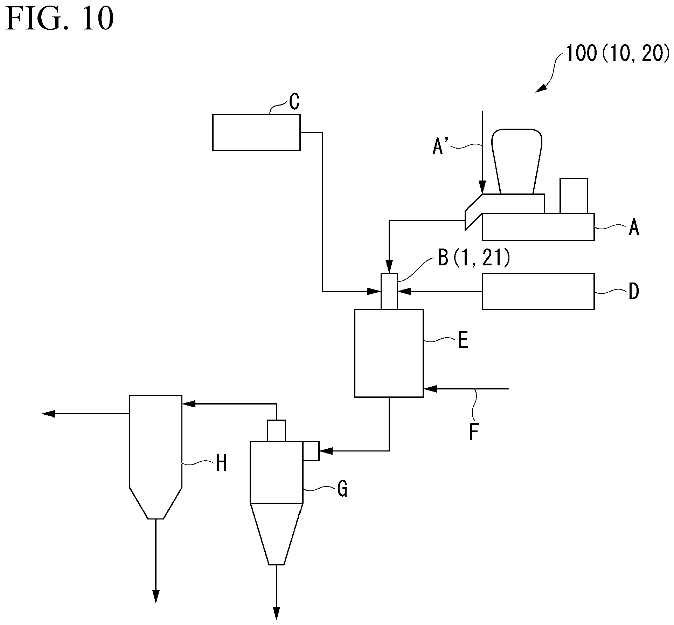

In order to spheroidize the raw material powder in a flame formed by a burner, a high-temperature flame is required. Therefore, as the burner B shown in FIG. 10, an oxygen combustion burner using a fuel gas and pure oxygen (hereinafter, may be simply referred to as "oxygen burner") is usually used.

As such an oxygen burner, for example, Patent Document 1 discloses a diffusion type burner having a concentric double pipe structure in which a large number of small pipes are provided between the inner pipe and the outer pipe.

Further, Patent Documents 2 and 3 disclose a diffusion type oxygen burner having a concentric quadruple pipe structure. Specifically, the diffusion type burner disclosed in Patent Documents 2 and 3 supplies raw material powder into a combustion chamber using oxygen gas or an oxygen-enriched gas as carrier gas from the center, a fuel gas from the outer periphery thereof, and primary and secondary oxygen from the outer periphery thereof. A cooling-water passage for cooling the burner is provided on the outermost periphery.

As described above, in the oxygen burner disclosed in Patent Documents 1 to 3, since the fuel gas and the combustion-supporting gas (oxygen gas) are mixed and combusted in the combustion chamber, a high-temperature oxygen combustion flame can be obtained.

PRIOR ART DOCUMENTS

PATENT LITERATURE

Patent Document 1: Japanese Patent Application, First Publication No. Sho 58-145613
Patent Document 2: Japanese Patent No. 3331491
Patent Document 3: Japanese Patent No. 3312228

SUMMARY OF INVENTION

PROBLEM TO BE SOLVED BY THE INVENTION

However, since the conventional oxygen burner disclosed in Patent Documents 1 to 3 generally uses a fuel gas containing a carbon source such as city gas or LPG, a large amount of carbon dioxide, which is a warming gas, is generated at the time of combustion.

In addition, when incomplete combustion occurs, soot, which is solid carbon, is generated, so there is a possibility of a small amount of carbon being mixed in the product inorganic spheroidized particles.

The present invention has been made in view of the above circumstances, and an object of the present invention is to provide a burner for producing inorganic spheroidized particles, an apparatus for producing inorganic spheroidized particles, and a method for producing inorganic spheroidized particles which can significantly reduce the amount of warming gas generated and suppress the generation of soot during combustion.

MEANS FOR SOLVING THE PROBLEM

In order to achieve the objects, the present invention provides the following burner for producing inorganic spheroidized particles.

[1] A burner for producing inorganic spheroidized particles using a fuel gas and a combustion-supporting gas containing oxygen, including;

a raw material powder supply path which supplies inorganic powder as raw material powder;
a first fuel gas supply path which supplies a first fuel gas containing no carbon source; and
a first combustion-supporting gas supply path which supplies a first combustion-supporting gas.

[2] The burner for producing inorganic spheroidized particles according to [1],

wherein the burner further includes a plurality of first premixing chambers which are arranged at a position near a tip of the burner in an axial direction and mix the first fuel gas and the first combustion-supporting gas,
the first fuel gas supply path branches into a plurality of first fuel supply branched flow paths near the tip of the burner in the axial direction,
the first combustion-supporting gas supply path branches into a plurality of first combustion-supporting gas supply branched flow paths near the tip of the burner in the axial direction, and
the first premixing chamber communicates with any one of the first fuel supply branched flow paths and any one of the first combustion-supporting gas supply branched flow paths.

[3] The burner for producing inorganic spheroidized particles according to [2],
wherein each of a plurality of the first premixing chambers has an opening at the tip of the burner in the axial direction.
[4] The burner for producing inorganic spheroidized particles according to [2] or [3],
wherein the first fuel supply branched flow paths are arranged inside the first combustion-supporting gas supply branched flow paths.
[5] The burner for producing inorganic spheroidized particles according to [4],

wherein a tip of the first fuel supply branched flow path is arranged inside the first combustion-supporting gas supply branched flow path,
a space from the tip of the first fuel supply branched flow path to the tip of the first combustion-supporting gas supply branched flow path is the first premixing chamber, and
an opening at the tip of the first combustion-supporting gas supply branched flow path is the opening of the first premixing chamber.

[6] The burner for producing inorganic spheroidized particles according to any one of [1] and [3] to [5],

wherein the burner further includes a plurality of first premixing chambers which are arranged at a position near the tip of the burner in the axial direction and mix the first fuel gas and the first combustion-supporting gas,
the raw material powder supply path branches into a plurality of raw material powder supply branched flow paths near the tip of the burner in the axial direction, and
the raw material powder supply branched flow paths communicate with raw material powder ejection holes which open at the tip of the burner in the axial direction.

[7] The burner for producing inorganic spheroidized particles according to [6], wherein when the tip of the burner is viewed in plan view, openings of a plurality of the raw material powder ejection holes are arranged in an annular shape centered on the central axis of the burner.
[8] The burner for producing inorganic spheroidized particles according to [7], wherein when the tip of the burner is viewed in plan view, openings of a plurality of first premixing chambers are arranged in an annular shape centered on the central axis of the burner on either or both the inside and outside of the raw material powder ejection holes arranged in an annular shape.
[9] The burner for producing inorganic spheroidized particles according to [7],
wherein the burner further includes:

a second fuel gas supply path which supplies a second fuel gas;
a second combustion-supporting gas supply path which supplies a second combustion-supporting gas; and

a plurality of second premixing chambers which are arranged at a position near the tip of the burner in the axial direction, and mix the second fuel gas and the second combustion-supporting gas;
the second fuel gas supply path branches into a plurality of second fuel supply branched flow paths at a portion near the tip of the burner;
the second combustion-supporting gas supply path branches into a plurality of second combustion-supporting gas supply branched flow paths at a portion near the tip of the burner;
a tip of the second fuel supply branched flow path is arranged inside the second combustion-supporting gas supply branched flow path, and a space from the tip of the second fuel supply branched flow path to the tip of the second combustion-supporting gas supply branched flow path is the second premixing chamber; and
an opening of the tip of the second combustion-supporting gas supply branched flow path is an opening of the second premixing chamber.

[10] The burner for producing inorganic spheroidized particles according to [9], wherein when the tip of the burner is viewed in plan view, the openings of a plurality of the first premixing chambers are arranged in an annular shape centered on the central axis of the burner on either the inside or the outside of the opening of the raw material powder ejection holes arranged in an annular shape, and the openings of a plurality of the second premixing chambers are arranged in an annular shape centered on the central axis of the burner on the other side.
In order to achieve the object, the present invention provides the following apparatus for producing inorganic spheroidized particles.
[11] An apparatus for producing inorganic spheroidized particles, including:

a burner according to any one of [1] to [10],
a vertical spheroidizing furnace in which the burner for producing inorganic spheroidized particles is connected vertically downward to the top thereof; and
a cyclone and a bag filter provided in a subsequent stage of the spheroidizing furnace.

In order to achieve the object, the present invention provides the following method for producing inorganic spheroidized particles.
[12] A method for producing inorganic spheroidized particles in which inorganic powder is melted and spheroidized by a burner flame formed by combustion of a fuel gas and a combustion-supporting gas containing oxygen, wherein a substance containing no carbon source is used as the fuel gas.
[13] The method for producing inorganic spheroidized particles according to [12], wherein ammonia or hydrogen is used as the fuel gas.
[14] The method for producing inorganic spheroidized particles according to [12] or [13], wherein the fuel gas and the combustion-supporting gas are supplied into a plurality of the premixing chambers, mixed in advance, combusted to generate a flame, and the inorganic powder is sent into the flame.
[15] The method for producing inorganic spheroidized particles according to [14], wherein when a volume per premixing chamber is v [$m^3$] and a total flow rate of the fuel gas and the combustion-supporting gas is Q [Nm3/h], the first fuel gas and the first combustion-supporting gas are supplied into the premixing chamber so as to satisfy the relationship of the following equation (1).

$$5.5 \times 10^{-6} \geqq v/Q \geqq 2.2 \times 10^{-7} \qquad \text{Equation (1)}$$

EFFECTS OF THE INVENTION

The burner for producing inorganic spheroidized particles of the present invention can significantly reduce the amount of warming gas and suppress the generation of soot during combustion.
Since the apparatus for producing inorganic spheroidized particles of the present invention is provided with the burner for producing inorganic spheroidized particles, the amount of warming gas generated can be significantly reduced and the generation of soot during combustion can be suppressed.
The method for producing inorganic spheroidized particles of the present invention can significantly reduce the amount of warming gas generated and suppress the generation of soot during combustion.

BRIEF DESCRIPTION OF DRAWINGS

[FIG. 1] FIG. 1 is a plan view showing a burner of the first embodiment according to the present invention.

[FIG. 2] FIG. 2 is a cross-sectional view taken along the line A-A' shown in FIG. 1.

[FIG. 3] FIG. 3 is an enlarged cross-sectional view of the burner shown in FIG. 2.

[FIG. 4] FIG. 4 is a plan view showing a burner of the second embodiment according to the present invention.

[FIG. 5] FIG. 5 is a cross-sectional view taken along the line B-B' shown in FIG. 4.

[FIG. 6] FIG. 6 is an enlarged cross-sectional view of the burner shown in FIG. 5.

[FIG. 7] FIG. 7 is a plan view showing a modified burner of the first embodiment according to the present invention.

[FIG. 8] FIG. 8 is a cross-sectional view taken along the line C-C' shown in FIG. 7.

[FIG. 9] FIG. 9 is a cross-sectional view taken along the line D-D' shown in FIG. 8.

[Fig. 10] FIG. 10 is a system diagram showing a conventional apparatus for producing inorganic spheroidized particles.

DETAILED DESCRIPTION OF THE PREFERRED EMBODIMENTS

<First Embodiment>

Hereinafter, a burner for producing inorganic spheroidized particles of the first embodiment according to the present invention will be described in detail using drawings together with an apparatus and a method for producing inorganic spheroidized particles using the burner. In addition, in the drawings used in the following explanation, in order to make the features easy to understand, the featured parts may be enlarged for convenience, and the dimensional ratios of each component may not be the same as the actual ones.

(Burner for producing inorganic spheroidized particles)

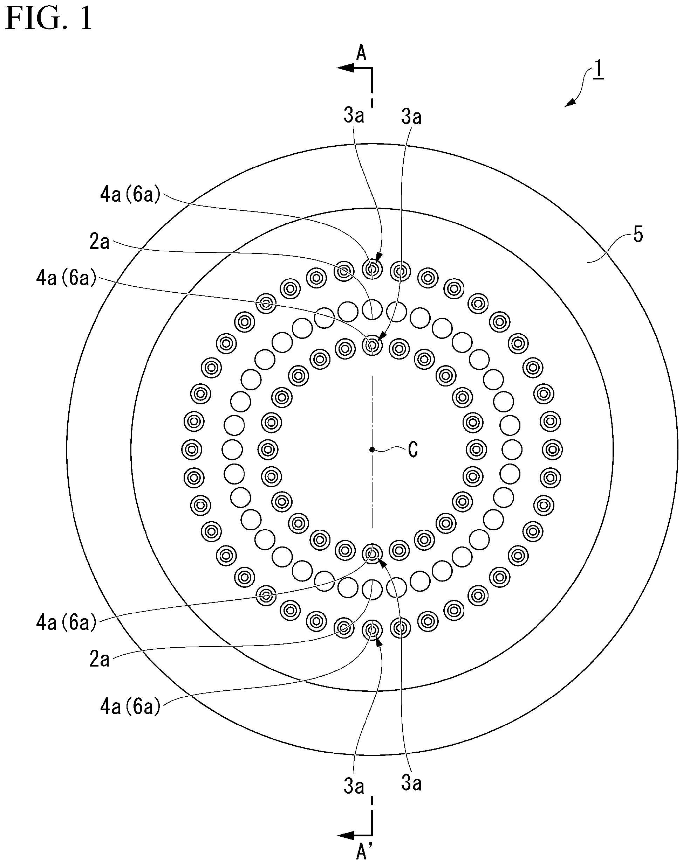

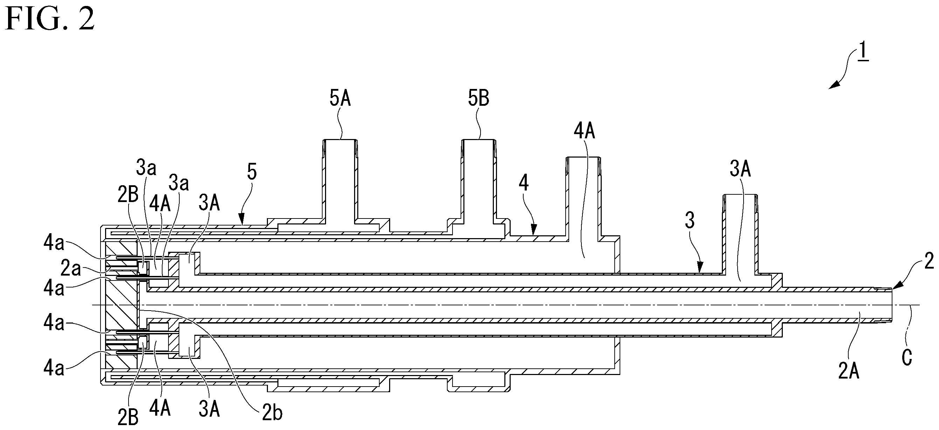

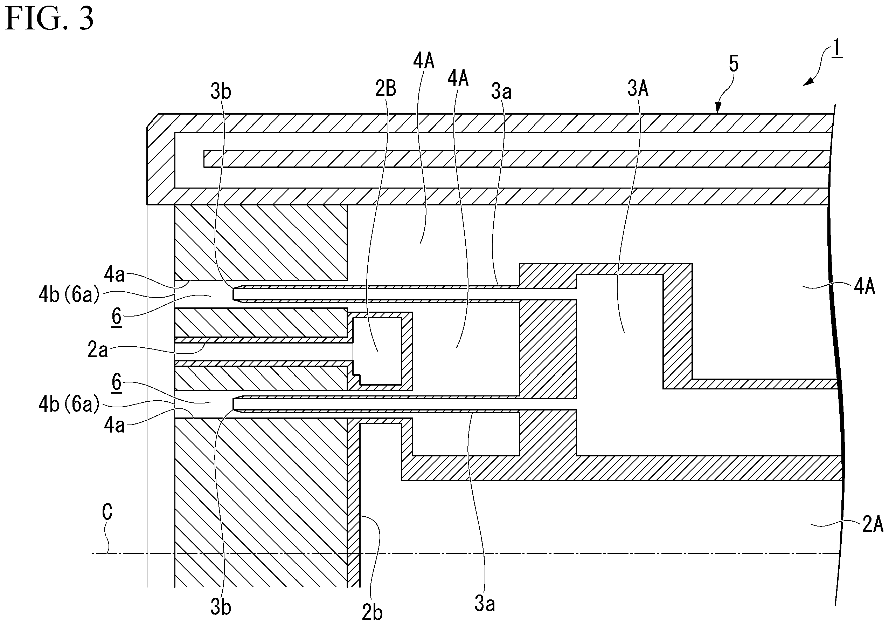

First, the burner for producing inorganic spheroidized particles of the first embodiment according to the present invention will be described. FIGS. 1 to 3 show the burner for producing inorganic spheroidized particles (hereinafter, may be simply referred to as "burner") of the first embodiment according to the present invention. FIG. 1 is a plan view of the burner from the tip side. FIG. 2 is a cross-sectional view cut along A-A' through the central axis C of the burner shown in FIG. 1. FIG. 3 is an enlarged cross-sectional view of the tip side of the burner.
As shown in FIGS. 1 to 3, a burner 1 has a concentric multi-pipe structure including a raw material powder supply pipe 2, a first fuel supply pipe 3, a first combustion-supporting gas supply pipe 4, and a water-cooling jacket 5 disposed from the central axis C of the burner 1 toward the outside in the circumferential direction. Further, the burner 1 is an oxygen combustion burner using a fuel gas and a combustion-supporting gas containing oxygen.
As shown in FIG. 2, the raw material powder supply pipe 2 extends along the axial direction of the burner 1 at the innermost portion of the concentric multi-pipe structure of the burner 1. The space inside the raw material powder supply pipe 2 is a raw material powder supply path 2A. As a result, it is possible to supply inorganic powder as raw material powder as a mixture with carrier gas.
The raw material powder supply path 2A branches into a plurality of raw material powder supply branched flow paths 2B extending radially from the central axis of the burner 1 at a portion near the tip in the axial direction of the burner 1.
Further, as shown in FIGS. 2 and 3, the raw material powder supply branched flow paths 2B communicate with raw material powder ejection holes 2a having an opening at the tip in the axial direction of the burner.
As a result, the burner 1 ejects the raw material powder in the direction parallel to the central axis C of the burner 1 through the raw material powder supply path 2A, a plurality of the raw material powder supply branched flow paths 2B, and a plurality of the raw material powder ejection holes 2a.
Specifically, as shown in FIG. 1, when the tip of the burner 1 is viewed in plan view, the openings of a plurality of the raw material powder ejection holes 2a are arranged in an annular shape at equal intervals centered on the central axis of the burner 1. As a result, the heat generated by the flame formed inside or outside the raw material powder supply holes 2a can be efficiently received by the raw material powder.
Further, as shown in FIGS. 2 and 3, the raw material powder supply path 2A is provided with a dispersion plate 2b for uniformly dispersing the raw material powder into a plurality of the raw material powder supply branched flow paths 2B at the portion near the tip of the burner 1 in the axial direction.

Further, the raw material powder supply path 2A is connected to a raw material powder supply source (not shown in FIGS.) and a carrier gas supply source (not shown in FIGS.) on the proximal end side.

The raw material powder is not particularly limited as long as it is a compound (inorganic powder) for which desirable spherical particles can be obtained. Specific examples of such a compound include inorganic oxides such as $SiO_2$, $Al_2O_3$, $MgO$ and $Fe_2O_3$.

The particle morphology of the raw material powder is not particularly limited, and may be non-spherical particles having corners or spherical particles having no corners.

The particle size of the raw material powder is preferably in the range from 1 to 500 $\mu$m, and preferably in the range from 1 to 100 $\mu$m. Here, if the particle size of the raw material powder is less than 1 $\mu$m, the particles aggregate due to static electricity, and if it exceeds 500 $\mu$m, it cannot be sufficiently heated in a burner flame, which is not preferable. On the other hand, if it is within the range above, it is preferable because the raw material powder can be sufficiently heated and spheroidized while being appropriately dispersed in the flame.

The carrier gas is not particularly limited as long as it is a gas capable of carrying the raw material powder. Specifically, for example, when safety is taken into consideration, an inert gas such as nitrogen gas or argon gas can be used as the carrier gas. On the other hand, when oxygen or oxygen-enriched air is used as the carrier gas, the carrier gas can be also used as a combustion-supporting agent for the raw material powder. As a result, when forming a flame described later, a higher-temperature flame can be formed.

As shown in FIG. 2, the first fuel supply pipe 3 is provided so as to cover the outside of the raw material powder supply pipe 2. The central axis of the first fuel supply pipe 3 and the central axis of the raw material powder supply pipe 2 coincide with each other, and the first fuel supply pipe 3 is provided coaxially with the raw material powder supply pipe 2.

An annular space provided between the first fuel supply pipe 3 and the raw material powder supply pipe 2 is a first fuel gas supply path 3A for supplying the first fuel gas. In other words, the first fuel gas supply path 3A is provided so as to cover the outer periphery of the first powder supply path 2A.

The base end side of the first fuel gas supply path 3A is connected to a first fuel gas supply source 12 (not shown in FIGS.).

As the first fuel gas, any substance can be used as long as it does not contain a carbon source. Examples of the first fuel gas includes ammonia ($NH_3$), and hydrogen ($H_2$). If necessary, the first fuel gas may be diluted with an inert gas such as nitrogen gas or argon gas.

The tip of the first fuel gas supply path 3A is on the base end side in the axial direction of the burner 1 with respect to the position at which the raw material powder supply path 2A branches into a plurality of the raw material powder supply branched flow paths 2B. Therefore, the first fuel gas supply path 3A is not provided on the outer periphery of the portion near the tip of the first powder supply path 2A.

The annular space near the tip of the first fuel gas supply path 3A has a larger outer diameter than that of the base end portion and the central portion. The outer periphery of the annular space near the tip of the first fuel gas supply path 3A is preferably arranged outside the raw material powder ejection holes 2a. As a result, as shown in FIG. 1, when the tip of the burner 1 is viewed in plan view, the first fuel gas for forming a flame can be supplied to a position outside a plurality of the raw material powder ejection holes 2a.

As shown in FIGS. 2 and 3, the tip of the first fuel gas supply path 3A of which the diameter is expanded in the radial direction from the central axis C of the burner 1 is connected to a plurality of first fuel gas ejection nozzles (first fuel supply support flow paths) 3a extending in a direction parallel to the axial direction of the burner 1. The first fuel gas supply path 3A and the space inside a plurality of the first fuel gas ejection nozzles 3a communicate with each other. As a result, the fuel gas can be supplied from the first fuel gas supply path 3A into a plurality of the first fuel gas ejection nozzles 3a. In other words, the first fuel gas supply path 3A branches into a plurality of the first fuel gas ejection nozzles 3a at the portion near the tip of the burner 1.

As shown in FIG. 2, the first combustion-supporting gas supply pipe 4 is provided so as to cover the outside of the first fuel supply pipe 3. The central axis of the first combustion-supporting gas supply pipe 4 coincides with the central axis of the first fuel supply pipe 3, and the first combustion-supporting gas supply pipe 4 is provided coaxially with the first fuel supply pipe 3 and the raw material powder supply pipe 2.

The annular space provided between the first combustion-supporting gas supply pipe 4 and the first fuel supply pipe 3 is a first combustion-supporting gas supply path 4A for supplying the first combustion-supporting gas. In other words, the first combustion-supporting gas supply path 4A is provided so as to cover the tip and the outer periphery of the first fuel gas supply path 3A.

The base end side of the first combustion-supporting gas supply path 4A is connected to a first combustion-supporting gas supply source (not shown in FIGS.).

The first combustion-supporting gas is not particularly limited as long as it is a gas capable of reacting with the first fuel gas to form a flame atmosphere. Examples of the first combustion-supporting gas include oxygen, and oxygen-enriched air.

The tip of the first combustion-supporting gas supply path 4A is on the tip side in the axial direction of the burner 1 with respect to the position at which the raw material powder supply path 2A branches into a plurality of the raw material powder supply particulate flow paths 2B. Therefore, the first combustion-supporting gas supply path 4A is provided so as to cover the outer periphery of the portion near the tip of the first powder supply path 2A.

The annular space near the tip of the first combustion-supporting gas supply path 4A has a smaller inner diameter than that of the base end portion and the central portion. The inner periphery of the annular space near the tip of the first combustion-supporting gas supply path 4A is preferably arranged inside the raw material powder ejection holes 2a. As a result, as shown in FIG. 1, when the tip of the burner 1 is viewed in plan view, the first combustion-supporting gas for forming a flame can be supplied to a position inside a plurality of the raw material powder ejection holes 2a.

As shown in FIGS. 2 and 3, the tip of the first combustion-supporting gas supply path 4A of which the diameter is expanded from the outside in the circumferential direction toward the central axis C of the burner 1 is connected to a plurality of first combustion-supporting gas supply holes (first combustion-supporting gas supply branched flow path) 4a which extend in a direction parallel to the axial direction of the burner 1. The first combustion-supporting gas supply path 4A and the space inside a plurality of the first combustion-supporting gas supply holes 4a communicate with each other. As a result, the first combustion-supporting gas can be supplied from the first combustion-supporting gas supply path 4A to a plurality of the first combustion-supporting gas supply holes 4a. In other words, the first combustion-supporting gas supply path 4A branches into a plurality of the first combustion-supporting gas supply holes 4a at the portion near the tip of the burner 1.

As shown in FIG. 2, the water-cooling jacket 5 is provided so as to cover the outside of the first combustion-supporting gas supply pipe 4. The water-cooling jacket 5 is provided with a cooling-water inlet 5A and a cooling-water outlet 5B. As a result, the cooling-water supplied from the cooling-water inlet 5A into the flow path in the water-cooling jacket 5 is discharged from the cooling-water outlet 5B after cooling the burner 1 particularly near the tip of the burner 1.

In the burner 1 of the present embodiment, as shown in FIG. 3, the first fuel gas ejection nozzle 3a is arranged inside the first combustion-supporting gas supply hole 4a. Further, a tip 3b of the first fuel gas ejection nozzle 3a is arranged inside the first combustion-supporting gas supply hole 4a. That is, the first fuel gas ejection nozzle 3a opens inside the first combustion-supporting gas supply hole 4a.

When the first fuel gas is ejected from the tip 3b of the first fuel gas ejection nozzle 3a into the inside of the first combustion-supporting gas supply hole 4a, the combustion-supporting gas is supplied from the first combustion-supporting gas supply path 4A toward the inside of the first combustion-supporting gas supply hole 4a. Then, the first fuel gas and the first combustion-supporting gas are mixed inside the first combustion-supporting gas supply hole 4a in front of the tip 3b of the first fuel gas ejection nozzle 3a.

As described above, the space from the tip 3b of the first fuel gas ejection nozzle 3a to a tip 4b of the first combustion-supporting gas supply hole 4a is a first premixing chamber 6 for mixing the first fuel gas and the first combustion-supporting gas. Further, the opening at the tip 4b of the first combustion-supporting gas supply hole 4a becomes an opening 6a of the first premixing chamber 6.

In other words, the burner 1 according to the present embodiment includes a plurality of the first premixing chambers 6. These first premixing chambers 6 are arranged at a position near to the tip of the burner 1 in the axial direction. The first premixing chamber 6 communicates with one of the first fuel gas ejection nozzles 3a and one of the combustion-supporting gas supply holes 4a. The first premixing chamber 6 opens at the tip of the burner 1 in the axial direction.

A volume v1 of the first premixing chamber 6 is not particularly limited as long as the first fuel gas and the first combustion-supporting gas can be sufficiently mixed and there is no risk of flashback.

For example, when a total flow rate Q1 of the first fuel gas and the first combustion-supporting gas is 25 to 50 [Nm$^3$/h], the volume v1 [m$^3$] is preferably in a range from $3.0 \times 10^{-5}$ to $1.0 \times 10^{-3}$ [m$^3$], and more preferably in a range from $1.0 \times 10^{-4}$ to $1.0 \times 10^{-3}$ [m$^3$]. When the volume v1 is in the range from $1.0 \times 10^{-4}$ to $1.0 \times 10^{-3}$ [m$^3$], the first fuel gas and the first combustion-supporting gas can be sufficiently mixed.

Further, an offset distance L1 from the tip 3b of the first fuel gas ejection nozzle 3a to the tip 4b of the first combustion-supporting gas supply hole 4a is preferably in a range from $1.0 \times 10^{-3}$ to $1.0 \times 10^{-1}$ [m], and more preferably in a range from $2 \times 10^{-3}$ to $5 \times 10^{-2}$ [m].

Further, the number and volume of the first premixing chamber 6 can be appropriately selected according to the supply amount of the mixed gas of the first fuel gas and the first combustion-supporting gas, and the number, the volume, and the layout (arrangement) of the raw material powder ejection hole 2a.

In the first premixing chamber 6, the first fuel gas and the first combustion-supporting gas are mixed in advance and ejected as a mixed gas from the opening 6a in a direction parallel to the axial direction of the burner 1.

Since the burner 1 according to the present embodiment uses a substance containing no carbon source as the first fuel gas, the burner 1 includes a plurality of the first premixing chambers 6 having a small volume, and the first fuel gas and the first combustion-supporting gas are premixed in these first premixing chambers 6. As a result, the first fuel gas and the first combustion-supporting gas can be sufficiently mixed to improve the combustion efficiency, and there is no risk of flashback.

As shown in FIG. 1, when the tip of the burner 1 is viewed in plan view, the openings 6a of the plurality of the first premixing chambers 6 are arranged at equal intervals on the inside and outside of the raw material powder ejection holes 2a arranged in an annular shape centered on the central axis C of the burner 1 so as to be concentric circles. That is, the raw material powder ejection holes 2a are surrounded inside and outside by the openings 6a of the first premixing chambers 6.

In order to form a flame (hereinafter, also referred to as "first flame") by the mixed gas of the first fuel gas and the first combustion-supporting gas in the central portion (center portion) of the burner 1 according to the present embodiment, the openings 6a of a plurality of the first premixing chambers 6 are arranged in an annular shape, and a plurality of the raw material powder ejection holes 2a are arranged in an annular shape so as to surround the outer periphery of the first flame in the burner 1. Further, in order to form a flame (hereinafter, also referred to as "second flame") by the mixed gas of the first fuel gas and the first combustion-supporting gas so as to surround the outer periphery of the raw material powder ejection holes 2a, the openings 6a of a plurality of the first premixing chambers 6 are arranged in an annular shape. As a result, the heat of the flame can be efficiently transferred to the raw material powder ejected from the raw material powder ejection holes 2a, and the raw material powder can be efficiently melted.

Further, by forming the second flame so as to surround the outer periphery of the raw material powder ejection holes 2a, the entrained air from the periphery of the burner 1 or the combustion exhaust gas in the furnace can be blocked, so that the efficiency of melting and spheroidizing of the inorganic powder can be improved.

(Apparatus for producing inorganic spheroidized particles)

Next, an example of an apparatus for producing inorganic spheroidized particles using the burner 1 described above will be described.

The apparatus 10 for producing inorganic spheroidized particles according to the present invention uses the burner 1 instead of the burner B in a conventional apparatus 100 for producing inorganic spheroidized particles shown in FIG. 10.

Reference numeral E in FIG. 10 indicates a spheroidizing furnace. The spheroidizing furnace E is a cylindrical vertical furnace, and the burner 1 is mounted vertically downward on the ceiling (top) of the furnace so that the tip side thereof faces the inside of the furnace.

An air introduction passage F is connected near the bottom of the spheroidizing furnace E, from which cooling air can be introduced inside of the spheroidizing furnace E to lower the temperature of the discharged combustion gas.

The generated spheroidized particles are transported by combustion gas from the vicinity of the bottom of the spheroidizing furnace A and sent to the inlet of the cyclone G.

In addition, a duct is provided at the outlet of the cyclone G, and the duct is connected to the inlet of the bag filter H.

The raw material powder is supplied from the raw material supply machine (feeder) A, and is transported into the burner 1 along with the carrier gas supplied from the carrier gas supply device A'. The burner 1 is supplied with the first combustion-supporting gas from the first combustion-supporting gas supply facility C and the first fuel gas (substance containing no carbon source) from the first fuel gas supply facility D. Then, the exhaust gas containing the particles spheroidized in the flame in the spheroidizing furnace E is cooled (temperature diluted) by the air introduced from the air introduction passage F to the bottom of the spheroidizing furnace E, and the spheroidized particles are collected by the cyclone G and the bag filter H in the subsequent stage.

(Method for producing inorganic spheroidized particles)

Next, a method for producing spheroidized particles using an apparatus 10 provided with the burner 1 will be described. In the method for producing inorganic spheroidized particles of the present embodiment, the inorganic powder is melted and spheroidized by the burner flame formed by the combustion of the fuel gas and a combustion-supporting gas containing oxygen.

As shown in FIGS. 1 to 3, and FIG. 10, first, the raw material powder supplied from the raw material supply apparatus A' is transported into the raw material powder supply path 2A of the burner 1 by using the carrier gas supplied from the carrier gas supply apparatus A', and ejected from a plurality of the raw material powder ejection holes 2a toward the spheroidizing furnace E.

At the same time, a predetermined amount of the first fuel gas is sent from the first fuel gas supply facility D into the first fuel gas supply path 3A of the burner 1, and a predetermined amount of the first combustion-supporting gas is sent from the first combustion-supporting gas supply facility C into the first combustion-supporting gas supply path 4A. Then, a mixed gas of the first fuel gas and the first combustion-supporting gas is ejected toward the spheroidizing furnace E from the openings 6a of a plurality of the first premixing chambers 6 of the burner 1. At this time, the raw material powder is surrounded by the first flame and the second flame formed by the combustion of the mixed gas ejected from the openings 6a of the first premixing chambers 6. As a result, the inorganic powder, which is the raw material powder, is melted and spheroidized.

The spheroidized particles are suspended in a mixed gas of the combustion gas generated from the burner 1 and the air introduced from the air introduction passage F, and sent into the cyclone G from the combustion gas outlet of the spheroidizing furnace E. By mixing air with the combustion gas, the temperature of the gas introduced into the cyclone G is lowered, and the temperature becomes suitable for collecting particles in the cyclone G.

In the cyclone G, coarse spheroidized particles are collected from the spheroidized particles suspended in the gas. The gas derived from the cyclone G is sent to the bag filter H, and fine spheroidized particles are collected from among the spheroidized particles.

In the method for producing inorganic spheroidized particles of the present embodiment, ammonia or hydrogen containing no carbon source is used as the first fuel gas. In order to efficiently combust the carbon-free substances, the first fuel gas and the first combustion-supporting gas are supplied into a plurality of the first premixing chambers 6 of the burner 1, mixed in advance, and then combusted to generate a flame. Then, the inorganic powder is sent into the flame.

The flow rate r1 [$Nm^3/h$] of the first fuel gas supplied to each of the first premixing chambers 6 is not particularly limited, but the ratio [r1/R1] between the flow rate r1 of the first fuel gas supplied to each of the first premixing chambers 6 and the total flow rate R1 [$Nm^3/h$] of the first fuel gas is preferably in a range from 0.0125 to 0.025.

The flow rate of the first combustion-supporting gas supplied to each of the first premixing chambers 6 is not particularly limited, but the theoretical oxygen ratio M of the premixed gas in the first premixing chamber 6 is preferably in a range from 0.5 to 1.5, and more preferably in a range from 0.8 to 1.2.

Further, when the volume per one first premixing chamber 6 is v1 [$m^3$] and the total flow rate of the first fuel gas and the first combustion-supporting gas supplied to each of the first premixing chambers 6 is Q1 [$Nm^3/h$], it is preferable to supply the first fuel gas and the first combustion-supporting gas into the first premixing chamber 6 so as to satisfy the relationship of the following equation (1).

$$3.0 \times 10^{-4} \; \geqq \; v1/Q1 \; \geqq \; 9.0 \times 10^{-6} \qquad \text{Equation (1)}$$

By supplying the first fuel gas and the first combustion-supporting gas into the first premixing chamber 6 so as to satisfy the relationship of the formula (1) above, even when a substance containing no carbon source is used as the first fuel gas, the combustion efficiency can be improved. Further, it is possible to reduce the possibility that a flashback will occur when the burner 1 is burned.

As described above, the burner (burner for producing inorganic spheroidized particles) 1 of the present embodiment includes the raw material powder supply path 2A which supplies the inorganic powder as raw material powder, the first fuel gas supply path 3A which supplies the first fuel gas containing no carbon source, and the first combustion-supporting gas supply path 4A which supplies the first combustion-supporting gas. According to the burner 1, since the burner 1 uses ammonia ($NH_3$) or hydrogen (H2) which contains no carbon source as the fuel gas, it is possible to significantly reduce the amount of warming gas such as carbon dioxide ($CO_2$) generated. In addition, it is possible to suppress the generation of soot caused by the carbon source in the fuel and prevent soot from contaminating the product inorganic spheroidized particles.

Further, according to the apparatus 10 for producing inorganic spheroidized particles and the method for producing inorganic spheroidized particles of the present embodiment, since the burner 1 is used, the amount of warming gas generated can be significantly reduced and the generation of soot during combustion can be suppressed.

<Second embodiment

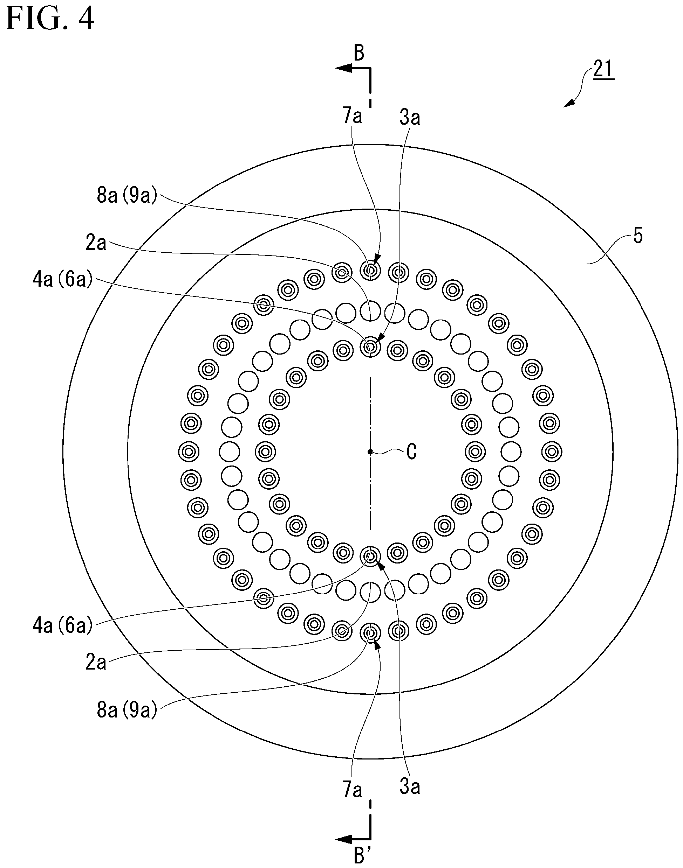

Next, a second embodiment according to the present invention will be described. A burner 21 of the present embodiment is different from the burner 1 of the first embodiment. Therefore, the burner 21 of the present embodiment will be described with reference to FIGS. 4 to 6. In the following description of the burner 21 of the present embodiment, the same components as those of the first embodiment are designated by the same reference numerals and the description thereof will be omitted.

(Burner for producing inorganic spheroidized particles)

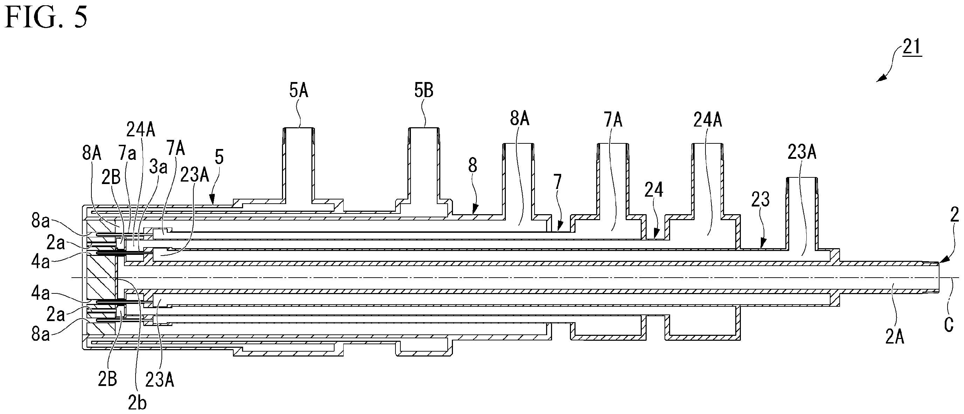

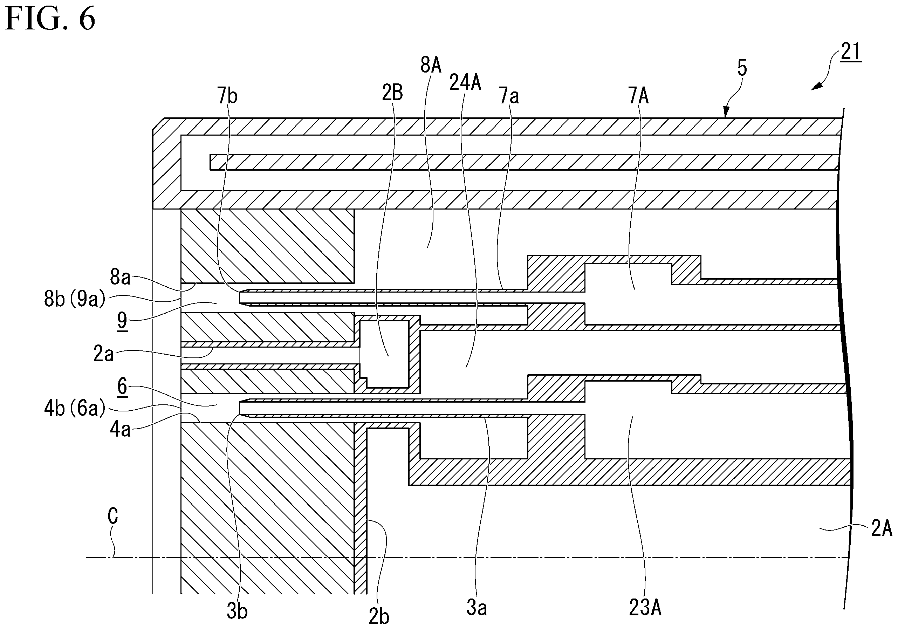

FIGS. 4 to 6 show the burner 21 for producing inorganic spheroidized particles (hereinafter, may be simply referred to as "burner") of the second embodiment according to the present invention. FIG. 4 is a plan view of the burner 21 from the tip side. FIG. 5 is a cross-sectional view cut along B-B' through the central axis C of the burner 21 shown in FIG. 4. FIG. 6 is an enlarged cross-sectional view of the tip side of the burner 21.

As shown in FIGS. 4 to 6, the burner 21 has a concentric multi-pipe structure including the raw material powder supply pipe 2, a first fuel supply pipe 23, and a first combustion-supporting gas supply pipe 24, a second fuel supply pipe 7, a second combustion-supporting gas supply pipe 8, and the water-cooling jacket 5 from the central axis C of the burner 1 toward the outside in the circumferential direction. Further, the burner 21 is an oxygen combustion burner using a fuel gas and a combustion-supporting gas containing oxygen.

As shown in FIG. 5, the first fuel supply pipe 23 is provided so as to cover the outside of the raw material powder supply pipe 2. The central axis of the first fuel supply pipe 23 and the central axis of the raw material powder supply pipe 2 coincide with each other, and the first fuel supply pipe 23 is provided coaxially with the raw material powder supply pipe 2.

The annular space provided between the first fuel supply pipe 23 and the raw material powder supply pipe 2 is a first fuel gas supply path 23A for supplying the first fuel gas. In other words, the first fuel gas supply path 23A is provided so as to cover the outer periphery of the first powder supply path 2A.

The base end side of the first fuel gas supply path 23A is connected to the first fuel gas supply source (not shown in FIGS.).

As the first fuel gas, any substance can be used as long as it does not contain a carbon source, as in the first embodiment. Examples of the first fuel gas include ammonia ($NH_3$), and hydrogen ($H_2$). If necessary, the first fuel gas may be diluted with an inert gas such as nitrogen gas or argon gas.

The tip of the first fuel gas supply path 23A is on the base end side in the axial direction of the burner 21 with respect to the position at which the raw material powder supply path 2A branches into a plurality of the raw material powder supply branched flow paths 2B. Therefore, the first fuel gas supply path 23A is not provided on the outer periphery of the portion near the tip of the first powder supply path 2A.

The annular space near the tip of the first fuel gas supply path 23A has the same or slightly larger outer diameter than that of the base end portion and the central portion. The outer periphery of the annular space near the tip of the first fuel gas supply path 23A is preferably inside the raw material powder ejection holes 2a. As a result, as shown in FIG. 4, when the tip of the burner 21 is viewed in plan view, the first fuel gas for forming a flame (first flame) can be supplied inside a plurality of the raw material powder ejection holes 2a.

As shown in FIGS. 5 and 6, a plurality of the first fuel gas ejection nozzles (first fuel supply branched flow paths) 3a extending in a direction parallel to the axial direction of the burner 21 are connected to the tip of the first fuel gas supply path 23A. The first fuel gas supply path 23A and the space inside the plurality of the first fuel gas ejection nozzles 3a communicate with each other. As a result, the fuel gas can be supplied from the first fuel gas supply path 23A to the plurality of the first fuel gas ejection nozzles 3a. In other words, the first fuel gas supply path 23A branches into a plurality of the first fuel gas ejection nozzles 3a at a portion near the tip of the burner 21.

As shown in FIG. 5, the first combustion-supporting gas supply pipe 24 is provided so as to cover the outside of the first fuel supply pipe 23. The central axis of the first combustion-supporting gas supply pipe 24 coincides with the central axis of the first fuel supply pipe 23, and the first combustion-supporting gas supply pipe 24 is provided coaxially with the first fuel supply pipe 23 and the raw material powder supply pipe 2.

The annular space provided between the first combustion-supporting gas supply pipe 24 and the first fuel supply pipe 23 is the first combustion-supporting gas supply path 24A for supplying the first combustion-supporting gas. In other words, the first combustion-supporting gas supply path 24A is provided so as to cover the tip and the outer periphery of the first fuel gas supply path 23A.

The base end side of the first combustion-supporting gas supply path 24A is connected to a first combustion-supporting gas supply source (not shown in FIGS.).

The first combustion-supporting gas is not particularly limited as long as it is a gas capable of reacting with the first fuel gas to form a flame atmosphere, as in the first embodiment. Examples of the first combustion-supporting gas include oxygen, and oxygen-enriched air.

The tip of the first combustion-supporting gas supply path 24A is on the tip side in the axial direction of the burner 21 with respect to the position at which the raw material powder supply path 2A branches into a plurality of the raw material powder supply branched flow paths 2B. Therefore, the first combustion-supporting gas supply path 24A is provided so as to cover the outer periphery of the portion near the tip of the first powder supply path 2A.

The annular space near the tip of the first combustion-supporting gas supply path 24A has a smaller inner diameter than that of the base end portion and the central portion. The inner periphery of the annular space near the tip of the first combustion-supporting gas supply path 24A is preferably inside the raw material powder ejection hole 2a. As a result, as shown in FIG. 4, when the tip of the burner 21 is viewed in plan view, the first combustion-supporting gas for forming the first flame can be supplied inside the plurality of raw material powder ejection holes 2a.

As shown in FIGS. 5 and 6, the tip of the first combustion-supporting gas supply path 24A of which the diameter is expanded from the outside in the circumferential direction of the burner 21 toward the central axis C is connected to a plurality of the first combustion-supporting gas supply holes (first combustion-supporting gas supply branched flow paths) 4a which extend in a direction parallel to the axial direction of the burner 21. The first combustion-supporting gas supply path 24A and the space inside the plurality of the first combustion-supporting gas supply holes 4a communicate with each other. As a result, the first combustion-supporting gas can be supplied from the first combustion-supporting gas supply path 24A to a plurality of the first combustion-supporting gas supply holes 4a. In other words, the first combustion-supporting gas supply path 24A branches into a plurality of the first combustion-supporting gas supply holes 4a at the portion near the tip of the burner 21.

As shown in FIG. 5, the second fuel supply pipe 7 is provided so as to cover the outside of the first combustion-supporting gas supply pipe 24. The central axis of the first fuel supply pipe 23 coincides with the central axis of the first combustion-supporting gas supply pipe 24, and the second fuel supply pipe 7 is provided coaxially with the first combustion-supporting gas supply pipe 24.

The annular space provided between the second fuel supply pipe 7 and the first combustion-supporting gas supply pipe 24 is a second fuel gas supply path 7A for supplying the second fuel gas. In other words, the second fuel gas supply path 7A is provided so as to cover the outer periphery of the first combustion-supporting gas supply path 24A.

The base end side of the second fuel gas supply path 7A is connected to a second fuel gas supply source (not shown in FIGS.).

As the second fuel gas, the same one as the first fuel gas can be used.

As the second fuel gas, the same one as the first fuel gas may be used, or a different one may be used.

If necessary, the second fuel gas may be diluted with an inert gas such as nitrogen gas or argon gas.

The tip of the second fuel gas supply path 7A is about the same as that of the first fuel gas supply path 23A in the axial direction of the burner 21. Therefore, the second fuel gas supply path 7A is not provided on the outer periphery of the portion near the tip of the first powder supply path 2A.

The annular space near the tip of the second fuel gas supply path 7A has the same or slightly larger outer diameter than that of the base end portion and the central portion. The outer periphery of the annular space near the tip of the second fuel gas supply path 7A is preferably outside the position of the raw material powder ejection holes 2a. As a result, as shown in FIG. 4, when the tip of the burner 21 is viewed in plan view, the second fuel gas for forming a flame (second flame) can be supplied to the outside of the plurality of raw material powder ejection holes 2a.

As shown in FIGS. 5 and 6, a plurality of second fuel gas ejection nozzles (second fuel supply branched flow path) 7a extending in a direction parallel to the axial direction of the burner 21 are connected to the tip of the second fuel gas supply paths 7A. The second fuel gas supply path 7A and the space inside the plurality of the second fuel gas ejection nozzles 7a communicate with each other. As a result, the second fuel gas can be supplied from the second fuel gas supply path 7A to the plurality of the second fuel gas ejection nozzles 7a. In other words, the second fuel gas supply path 7A branches into a plurality of the second fuel gas ejection nozzles 7a at the portion near the tip of the burner 21.

As shown in FIG. 5, the second combustion-supporting gas supply pipe 8 is provided so as to cover the outside of the second fuel supply pipe 7. The central axis of the second combustion-supporting gas supply pipe 8 coincides with the central axis of the second fuel supply pipe 7, and the second combustion-supporting gas supply pipe 8 is provided coaxially with the second fuel supply pipe 7 and the raw material powder supply pipe 2.

The annular space provided between the second combustion-supporting gas supply pipe 8 and the second fuel supply pipe 7 is a second combustion-supporting gas supply path 8A for supplying a second combustion-supporting gas. In other words, the second combustion-supporting gas supply path 8A is provided so as to cover the tip and the outer periphery of the second fuel gas supply path 7A.

The base end side of the second combustion-supporting gas supply path 8A is connected to a second combustion-supporting gas supply source (not shown in FIGS.).

The second combustion-supporting gas is not particularly limited as long as it is a gas capable of reacting with the second fuel gas to form a flame atmosphere, as the first combustion-supporting gas. Examples of the second combustion-supporting gas include oxygen and oxygen-enriched air. The second combustion-supporting gas may have the same component as the first combustion-supporting gas, or may have a different component.

The tip of the second combustion-supporting gas supply path 8A is on the tip side in the axial direction of the burner 21 with respect to the position at which the raw material powder supply path 2A branches into a plurality of the raw material powder supply branched flow paths 2B. Therefore, the second combustion-supporting gas supply path 8A is provided so as to cover the outer periphery of the portion near the tip of the first combustion-supporting gas supply path 24.

The annular space near the tip of the second combustion-supporting gas supply path 8A has a smaller inner diameter than that of the base end portion and the central portion. The inner periphery of the annular space near the tip of the second combustion-supporting gas supply path 8A is preferably outside the position of the raw material powder ejection hole 2a. As a result, as shown in FIG. 4, when the tip of the burner 21 is viewed in plan view, the second combustion-supporting gas for forming a flame (second flame) can be supplied outside the plurality of raw material powder ejection holes 2a.

As shown in FIGS. 5 and 6, the tip of the second combustion-supporting gas supply path 8A of which the diameter is expanded from the outside in the circumferential direction of the burner 21 toward the central axis C is connected to a plurality of second combustion-supporting gas supply holes (second combustion-supporting gas supply branched flow paths) 8a extending in a direction parallel to the axial direction of the burner 21. The second combustion-supporting gas supply path 8A and the space inside a plurality of the second combustion-supporting gas supply holes 8a communicate with each other. As a result, the second combustion-supporting gas can be supplied from the second combustion-supporting gas supply path 8A to a plurality of the second combustion-supporting gas supply holes 8a. In other words, the second combustion-supporting gas supply path 8A branches into a plurality of the second combustion-supporting gas supply holes 8a at the portion near the tip of the burner 21.

In the burner 21 of the present embodiment, as shown in FIG. 6, the second fuel gas ejection nozzle 7a is arranged inside the second combustion-supporting gas supply hole 8a. Further, a tip 7b of the second fuel gas ejection nozzle 7a is arranged inside the second combustion-supporting gas supply hole 8a. That is, the second fuel gas ejection nozzle 7a opens inside the second combustion-supporting gas supply hole 8a.

When the second fuel gas is ejected from the tip 7b of the second fuel gas ejection nozzle 7a into the inside of the second combustion-supporting gas supply hole 8a, the second combustion-supporting gas is supplied from the second combustion-supporting gas supply path 8A toward the inside of the second combustion-supporting gas supply hole 8a. Then, the second fuel gas and the second combustion-supporting gas are mixed inside the second combustion-supporting gas supply hole 8a in front of the tip 7b of the second fuel gas ejection nozzle 7a.

As described above, the space from the tip 7b of the second fuel gas ejection nozzle 7a to a tip 8b of the second combustion-supporting gas supply hole 8a is a second premixing chamber 9 for mixing the second fuel gas and the second combustion-supporting gas. Further, the opening of the tip 8b of the second combustion-supporting gas supply hole 8a becomes an opening 9a of the second premixing chamber 9.

In other words, the burner 21 of the present embodiment includes a plurality of the second premixing chambers 9. These second premixing chambers 9 are arranged at a position near to the tip of the burner 21 in the axial direction. The second premixing chamber 9 communicates with one of the second fuel gas ejection nozzles 7a and one of the second combustion-supporting gas supply holes 8a. The second premixing chamber 9 opens at the tip of the burner 21 in the axial direction.

A volume v2 of the second premixing chamber 9 is not particularly limited as long as the second fuel gas and the second combustion-supporting gas can be sufficiently mixed and there is no risk of flashback.

The volume v2 $[m^3]$ can be the same as the volume v1 of the first premixing chamber 6 described above. That is, when the total flow rate Q1 of the second fuel gas and the second combustion-supporting gas is 25 to 50 $[Nm^3/h]$, the volume v2 $[m^3]$ is preferably in a range from $3.0 \times 10^{-5}$ to $1.0 \times 10^{-3}$ $[m^3]$, and more preferably in a range from $1.0 \times 10^{-4}$ to $1.0 \times 10^{-3}$ $[m^3]$. When the volume v2 is in the range from $1.0 \times 10^{-4}$ to $1.0 \times 10^{-3}$ $[m^3]$, the second fuel gas and the second combustion-supporting gas can be sufficiently mixed in the second premixing chamber 9.

Further, an offset distance L2 from the tip 7b of the second fuel gas ejection nozzle 7a to the tip 8b of the second combustion-supporting gas supply hole 8a is preferably in a range from $1.0 \times 10^{-3}$ to $1.0 \times 10^{-1}$ [m], and more preferably in a range from $2 \times 10^{-3}$ to $5 \times 10^{-2}$ [m] as in the offset distance L1 described above.

Further, the number and the volume of the second premixing chamber 9 can be appropriately selected according to the supply amount of the mixed gas of the second fuel gas and the second combustion-supporting gas, and the number and the volume and the layout (arrangement) of the raw material powder ejection hole 2a.

In the second premixing chamber 9, the second fuel gas and the second combustion-supporting gas are mixed in advance and ejected as the mixed gas from the opening 9a in a direction parallel to the axial direction of the burner 21.

Since the burner 21 according to the present embodiment uses a substance containing no carbon source as the first fuel gas and the second fuel gas, the burner 1 includes a plurality of the first premixing chambers 6 and the second premixing chambers 9 having a small volume, the first fuel gas and the first combustion-supporting gas are premixed in these first premixing chambers 6, and the second fuel gas and the second combustion-supporting gas are premixed in these second premixing chambers 9. As a result, the fuel gas and the combustion-supporting gas can be sufficiently mixed to improve the combustion efficiency, and there is no risk of flashback.

As shown in FIG. 4, when the tip of the burner 21 is viewed in plan view, the openings 6a of the plurality of the first premixing chambers 6 are arranged at equal intervals on the inside of the raw material powder ejection holes 2a arranged in an annular shape centered on the central axis C of the burner 21 so as to be concentric circles, and the openings 9a of the plurality of the second premixing chambers 9 are arranged at equal intervals on the outside of the raw material powder ejection holes 2a arranged in an annular shape centered on the central axis C of the burner 21 so as to be concentric circles. That is, the raw material powder ejection holes 2a are surrounded inside by the openings 6a of the first premixing chambers 6 and outside by the openings 9a of the second premixing chambers 9.

In other words, in order to form a flame (hereinafter, also referred to as "first flame") by the mixed gas of the first fuel gas and the first combustion-supporting gas in the central portion (center portion) of the burner 21, the openings 6a of a plurality of the first premixing chambers 6 are arranged in an annular shape, and a plurality of the raw material powder ejection holes 2a are arranged in an annular shape so as to surround the outer periphery of the first flame in the burner 21. Further, in order to form a flame (hereinafter, also referred to as "second flame") by the mixed gas of the second fuel gas and the second combustion-supporting gas so as to surround the outer periphery of the raw material powder ejection holes 2a, the openings 6a of a plurality of the second premixing chambers 6 are arranged in an annular shape. As a result, the heat of the flames can be efficiently transferred to the raw material powder ejected from the raw material powder ejection holes 2a, and the raw material powder can be efficiently melted.

Further, by forming the second flame so as to surround the outer periphery of the raw material powder ejection holes 2a, the entrained air from the periphery of the burner 21 or the combustion exhaust gas in the furnace can be blocked, so that the efficiency of melting and spheroidizing of the inorganic powder can be improved.

Further, according to the burner 21 of the present embodiment, the flow rate of the first fuel gas for forming the first flame and the flow rate of the second fuel gas for forming the second flame are independently controlled, and the flow rate of the first combustion-supporting gas for forming the first flame and the flow rate of the second combustion-supporting gas for forming the second flame can be controlled independently. This makes it possible to create an appropriate combustion state for the raw material powder ejected from the tip of the burner 21.

(Apparatus for producing inorganic spheroidized particles)

An apparatus 20 for producing inorganic spheroidized particles according to the present invention uses the burner 21 above instead of the burner B in the conventional apparatus 100 for producing inorganic spheroidized particles shown in FIG. 10.

(Method for producing inorganic spheroidized particles)

Next, a method for producing inorganic spheroidized particles using the apparatus 20 provided with the burner 21 above will be described.

In the method for producing inorganic spheroidized particles of the present embodiment, the inorganic powder is melted and spheroidized by a burner flame formed by combustion of a fuel gas and a combustion-supporting gas containing oxygen.

In the method for producing inorganic spheroidized particles of the present embodiment, ammonia gas containing no carbon source is used as the first and second fuel gases. In order to efficiently combust the ammonia gas, the fuel gas and the combustion-supporting gas are supplied into a plurality of the first premixing chambers 6 and a plurality of the second premixing chambers 9 of the burner 21, and the fuel gas and the combustion-supporting gas are mixed in advance and then combusted to generate a flame. The inorganic powder is put into the flame.

The flow rate r2 [$Nm^3/h$] of the second fuel gas supplied to each of the first premixing chambers 9 is not particularly limited, but the ratio [r21/R2] between the flow rate r2 of the second fuel gas supplied to each of the first premixing chambers 9 and the total flow rate R2 [$Nm^3/h$] of the second fuel gas is preferably in a range from 0.0125 to 0.025.

The flow rate of the second combustion-supporting gas supplied to each of the first premixing chambers 9 is not particularly limited, but the theoretical oxygen ratio M of the premixed gas in the second premixing chamber 9 is preferably in a range from 0.5 to 1.5, and more preferably in a range from 0.8 to 1.2.

Further, when the volume per one second premixing chamber 9 is v2 [$m^3$] and the total flow rate of the second fuel gas and the second combustion-supporting gas supplied to each of the first premixing chambers 9 is Q2 [$Nm^3/h$], it is preferable to supply the second fuel gas and the second combustion-supporting gas into the second premixing chamber 9 so as to satisfy the relationship of the following equation (1').

$$6.0 \times 10^{-4} \geqq v2/Q2 \geqq 9.0 \times 10^{-5} \qquad \text{Equation (1')}$$

By supplying the second fuel gas and the second combustion-supporting gas into the second premixing chamber 9 so as to satisfy the relationship of the formula (1') above, even when a substance containing no carbon source is used as the second fuel gas, the combustion efficiency can be improved. Further, it is possible to reduce the possibility that a flashback will occur when the burner 21 is burned.

According to the method for producing inorganic spheroidized particles of the present embodiment, the supply of the fuel gas into the first fuel gas ejection nozzles 3a of the burner 21, and the supply of the fuel gas into the second fuel gas ejection nozzles 7a of the burner 21 are independent. Therefore, the flow rate of the first fuel gas and the first combustion-supporting gas for forming the first flame and the flow rate of the second fuel gas and the second combustion-supporting gas for forming the second flame are independently controlled. This makes it possible to create an appropriate combustion state for the raw material powder ejected from the tip of the burner 21.

Further, according to the method for producing inorganic spheroidized particles of the present embodiment, the supply of the fuel gas and the combustion-supporting gas to the first and second fuel gas injection nozzles of the burner 21 is independent of each other. Therefore, it is possible to supply a substance containing no carbon source such as ammonia ($NH_3$) and hydrogen ($H_2$) to both the first and second fuel gas ejection nozzles as the fuel gas. It is also possible to supply a substance containing no carbon source to one of the first and second fuel gas ejection nozzles as the fuel and supply a substance containing a carbon source to the other of the first and second fuel gas ejection nozzles as a fuel for auxiliary combustion.

As the fuel for auxiliary combustion, for example, a gaseous fuel such as methane ($CH_4$) or propane ($C_3H_8$) can be used. Further, if the apparatus 10 has a liquid atomization mechanism, a liquid fuel such as kerosene or alcohol can also be used.

In particular, ammonia has a lower combustion property than that of the conventional gaseous fuel containing a carbon source or hydrogen. Accordingly, when ammonia is used as the fuel gas, the flame temperature of the burner is raised while reducing the carbon dioxide generated during combustion by supplying the fuel for auxiliary combustion to the first fuel gas injection nozzles 3a or the second fuel gas injection nozzles 7a. As a result, the raw material powder can be efficiently melted. Further, the fuel for auxiliary combustion may be used only at the time of ignition, and the supply of the fuel for auxiliary combustion may be stopped after the combustion of the burner 21 is stabilized.

The technical scope of the present invention is not limited to the embodiments above, and various modifications can be made without departing from the spirit of the present invention. For example, in the burner 1 of the first embodiment described above, as shown in FIG. 1, when the tip of the burner 1 is viewed in plan view, a plurality of the first premixing chambers 6 are arranged at equal intervals so that the openings 6a of the first premixing chambers 6 are concentric circles inside and outside the raw material powder ejection holes 2a arranged in a circular shape around the central axis C of the burner 1. However, the present invention is not limited to this embodiment.

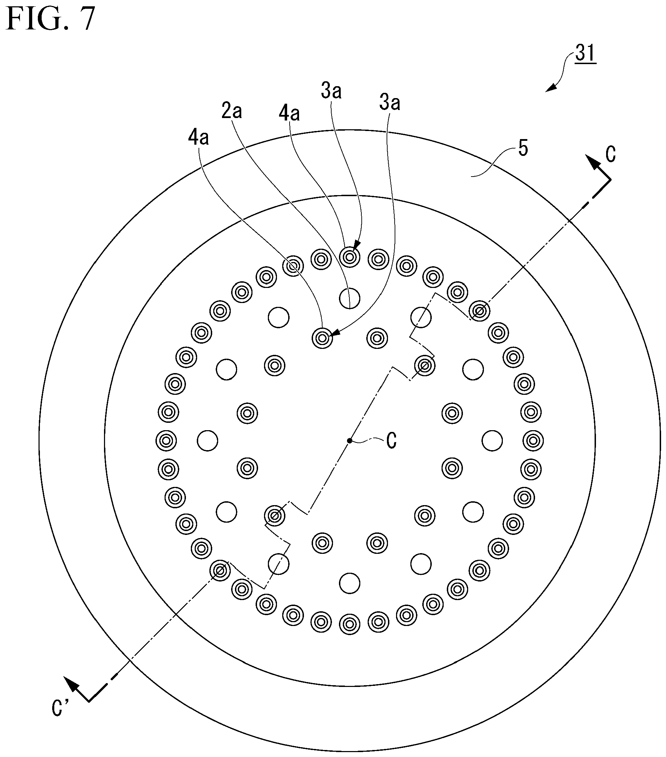

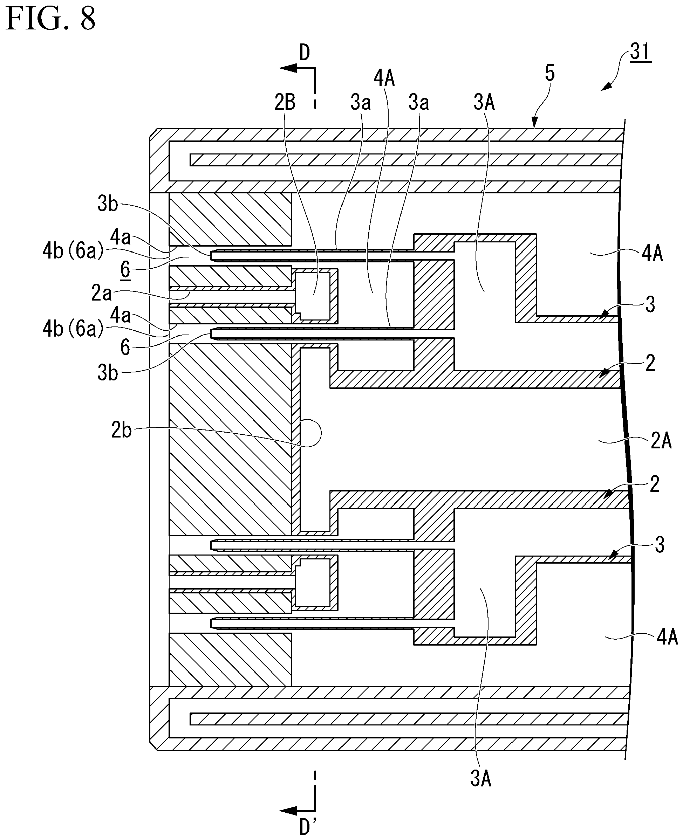

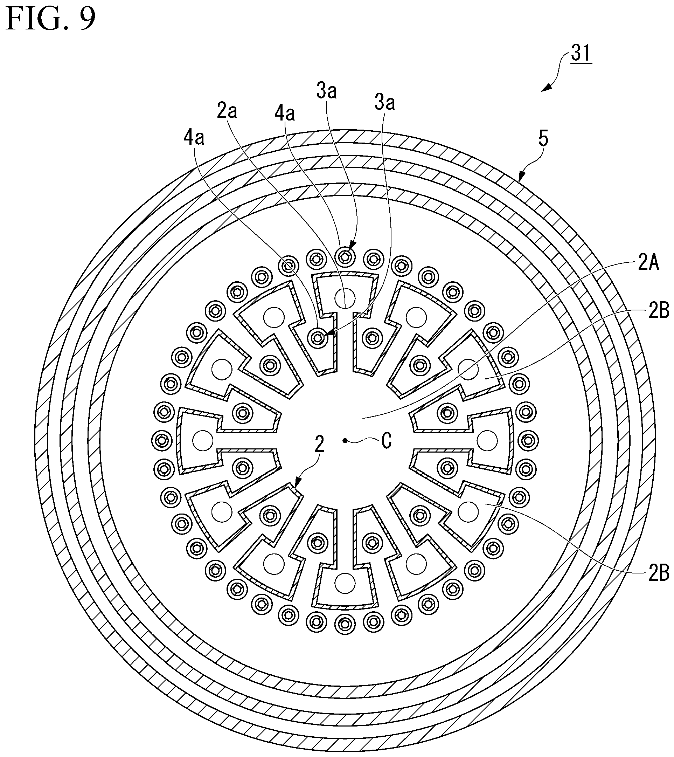

FIG. 7 to 9 show a burner 31 which is a modification of the burner 1 of the first embodiment. As shown in FIGS. 7 and 9, when the tip of the burner 31 is viewed in plan view or when the portion near the tip of the burner 31 is viewed in cross section, the openings 6a of the plurality of first premixing chambers 6 may be arranged at different intervals on the circumference of concentric circles arranged inside and outside the raw material powder ejection holes 2a arranged in an annular shape centered on the central axis C of the burner 31. Even with such a layout, the same effects as those of the first embodiment can be obtained.

FIG. 9 shows the burner 31 in which the raw material powder supply path 2A branches into a plurality of the raw material powder supply branched flow paths 2B extending radially outward from the central axis C of the burner 1 at the portion near the tip of the burner 31 in the axial direction. However, the present invention is not limited to this configuration.

Further, in the method for producing inorganic spheroidized particles of the second embodiment described above, when ammonia is used as the fuel gas, the fuel for auxiliary combustion is used at the time of ignition of the burner 21, but the fuel for auxiliary combustion may be used in the first embodiment.

The mode for supplying the fuel for auxiliary combustion to the burner 1 of the first embodiment and the burner 21 of the second embodiment is not particularly limited.

For example, the first fuel gas supply path 3A or the second fuel gas supply path 7A may be connected to a fuel supply source for auxiliary combustion not shown in FIGS so as to supply the fuel for auxiliary combustion to the first fuel gas injection nozzle 3a or the second fuel gas injection nozzle 7a.

Further, in the first premixing chambers 6 or the second premixing chambers 9 to which the fuel for auxiliary combustion is supplied, it is possible to switch from the mixed combustion of ammonia and the fuel for auxiliary combustion to the 100% ammonia combustion.

Further, preceding part of the burner 1 of the first embodiment and the burner 21 of the second embodiment may have any of the following mechanisms as the fuel gas supply mechanism:

mechanism for switching between a substance (fuel) containing no carbon source and a fuel for auxiliary combustion containing carbon source;
mechanism for steplessly controlling the mixing ratio (fuel: 100 to 0%, fuel for auxiliary combustion: 0 to 100%) between the substance (fuel) containing no carbon source and the fuel for auxiliary combustion containing carbon source by controlling the flow rate; and
mechanism which supplies or does not supply the fuel for auxiliary combustion only to any fuel gas injection nozzles

Example

The following is examples of producing inorganic spheroidized particles using the present invention.

(Comparative Example)

A conventional burner (the burner shown in FIG. 1 of Japanese Patent No. 331228) was installed at the top of the vertical furnace E of the apparatus for producing inorganic spherical particles as shown in FIG. 10, and the raw material cut out from the raw material A was supplied to the burner B, spheroidized in the furnace E, and recovered by the cyclone G and the bag filter H provided in the subsequent stage.

Specifically, 20 kg/h of silica powder having an average particle size of 30 $\mu$m was transported from the raw material supply path as the raw material powder with oxygen (carrier gas) of 7.5 Nm$^3$/h. Further, 5 Nm$^3$/h of LPG as the fuel gas from the fuel gas supply path and 20 Nm$^3$/h of oxygen as the combustion-supporting gas were introduced into the combustion chamber to produce spheroidized particles.

Table 1 shows the results of measuring the vitrification percentage and the amount of carbon in the spheroidized particles recovered by the cyclone G.

(Example)

The burner 1 of the present invention shown in FIGS. 1 to 3 was installed at the top of the vertical furnace E of the apparatus for producing inorganic spherical particles as shown in FIG. 10, and the raw material cut out from the raw material A was supplied to the burner B. Then, the particles were spheroidized in the furnace E and recovered by the cyclone G and the bag filter H provided in the subsequent stage.

Specifically, 20 kg/h of silica powder having an average particle size of 30 $\mu$m was transported from the raw material supply path as raw material powder with oxygen (carrier gas) of 7.5 Nm$^3$/h. For comparison with the conventional burner, ammonia (NH$_3$): 32 Nm$^3$/h from the fuel gas supply path and oxygen: 24 Nm$^3$/h from the combustion-supporting gas supply path as the combustion-supporting gas were supplied so that the calorific value was equivalent to that of LPG: 5 Nm$^3$/h. As a result, spheroidized particles were produced.

Table 1 shows the results of measuring the vitrification percentage and the amount of carbon in the spheroidized particles recovered by the cyclone G.

[Table 1]

|  | Fuel | Vitrification percentage (%) | Amount of carbon (% by mass) |
|---|---|---|---|
| Raw material | - | - | 0.003 |
| Comparative Example | LPG | 98 | 0.018 |
| Example | NH$_3$ | 97 | 0.001 < |

As shown in Table 1, the vitrification percentage of the inorganic spheroidized particles produced by using the conventional burner was 98%, and the amount of carbon in the spheroidized particles was 0.018% by mass.

On the other hand, the vitrification percentage of the inorganic spheroidized particles produced by using the burner 1 of the present invention was 97%, and the amount of carbon in the inorganic spheroidized particles was below the detection limit (0.001% by mass or less).

From the results, it was confirmed that inorganic spheroidized particles having a small amount of carbon in the product can be obtained by using the burner 1 of the present invention and using ammonia as the fuel gas.

INDUSTRIAL APPLICABILITY

The present invention can provide a burner for producing inorganic spheroidized particles, an apparatus for producing inorganic spheroidized particles, and a method for producing inorganic spheroidized particles, which can significantly reduce the amount of warming gas generated and suppress the generation of soot during combustion.

DESCRIPTION OF REFERENCE NUMERAL

1, 21, 31      burner (burner for producing inorganic spheroidized particles)
2A      raw material powder supply path
2B      raw material powder supply branched flow path
2a      raw material powder ejection hole
3A, 23A      first fuel gas supply path
3a      first fuel gas ejection nozzle (first fuel supply branched flow path)
3b      tip of the first fuel supply branched flow path

| 4A, 24A | first combustion-supporting gas supply path |
| 4a | first combustion-supporting gas supply hole (first combustion-supporting gas supply branched flow path) |
| 4b | tip of the first combustion-supporting gas supply branched flow path |
| 6 | first premixing chamber |
| 6a | opening of the first premixing chamber |
| 7 | second fuel gas supply path |
| 7a | second fuel gas ejection nozzle (second fuel supply branched flow path) |
| 7b | tip of the second fuel supply branched flow path |
| 8 | second combustion-supporting gas supply path |
| 8a | second combustion-supporting gas supply hole (second combustion-supporting gas supply branched flow path) |
| 8b | tip of the second combustion-supporting gas supply branched flow path |
| 9 | second premixing chamber |
| 9a | opening of the second premixing chamber |
| 10, 20 | apparatus for producing inorganic spheroidized particles |
| C | central axis of burner |
| E | spheroidizing furnace |
| G | cyclone |
| H | bag filter |
| v, v1, v2 | volume per one premixing chamber [$m^3$] |
| Q, Q1, Q2 | total flow rate of fuel gas and combustion-supporting gas [$Nm^3/h$] |

**Claims**

1. A burner for producing inorganic spheroidized particles using a fuel gas and a combustion-supporting gas containing oxygen, comprising;

   a raw material powder supply path which supplies inorganic powder as raw material powder;
   a first fuel gas supply path which supplies a first fuel gas containing no carbon source; and
   a first combustion-supporting gas supply path which supplies a first combustion-supporting gas.

2. The burner for producing inorganic spheroidized particles according to Claim 1, wherein the burner further comprises a plurality of first premixing chambers which are arranged at a position near a tip of the burner in an axial direction and mix the first fuel gas and the first combustion-supporting gas,

   the first fuel gas supply path branches into a plurality of first fuel supply branched flow paths near the tip of the burner in the axial direction,
   the first combustion-supporting gas supply path branches into a plurality of first combustion-supporting gas supply branched flow paths near the tip of the burner in the axial direction, and
   the first premixing chamber communicates with any one of the first fuel supply branched flow paths and any one of the first combustion-supporting gas supply branched flow paths.

3. The burner for producing inorganic spheroidized particles according to Claim 2, wherein each of a plurality of the first premixing chambers has an opening at the tip of the burner in the axial direction.

4. The burner for producing inorganic spheroidized particles according to Claim 2 or 3, wherein the first fuel supply branched flow paths are arranged inside the first combustion-supporting gas supply branched flow paths.

5. The burner for producing inorganic spheroidized particles according to Claim 4, wherein a tip of the first fuel supply branched flow path is arranged inside the first combustion-supporting gas supply branched flow path,

   a space from the tip of the first fuel supply branched flow path to the tip of the first combustion-supporting gas supply branched flow path is the first premixing chamber, and
   an opening at the tip of the first combustion-supporting gas supply branched flow path is an opening of the first premixing chamber.

6. The burner for producing inorganic spheroidized particles according to any one of Claims 1 and 3 to 5,

wherein the burner further comprises a plurality of first premixing chambers which are arranged at a position near the tip of the burner in the axial direction and mix the first fuel gas and the first combustion-supporting gas, the raw material powder supply path branches into a plurality of raw material powder supply branched flow paths near the tip of the burner in the axial direction, and

the raw material powder supply branched flow paths communicate with raw material powder ejection holes which open at the tip of the burner in the axial direction.

7. The burner for producing inorganic spheroidized particles according to Claim 6, wherein when the tip of the burner is viewed in plan view, openings of a plurality of the raw material powder ejection holes are arranged in an annular shape centered on the central axis of the burner.

8. The burner for producing inorganic spheroidized particles according to Claim 7, wherein when the tip of the burner is viewed in plan view, openings of a plurality of first premixing chambers are arranged in an annular shape centered on the central axis of the burner on either or both the inside and outside of the raw material powder ejection holes arranged in an annular shape.

9. The burner for producing inorganic spheroidized particles according to Claim 7, wherein the burner further comprises:

a second fuel gas supply path which supplies a second fuel gas;
a second combustion-supporting gas supply path which supplies a second combustion-supporting gas; and
a plurality of second premixing chambers which are arranged at a position near the tip of the burner in the axial direction, and mix the second fuel gas and the second combustion-supporting gas;
the second fuel gas supply path branches into a plurality of second fuel supply branched flow paths at a portion near the tip of the burner;
the second combustion-supporting gas supply path branches into a plurality of second combustion-supporting gas supply branched flow paths at a portion near the tip of the burner;
a tip of the second fuel supply branched flow path is arranged inside the second combustion-supporting gas supply branched flow path, and a space from the tip of the second fuel supply branched flow path to the tip of the second combustion-supporting gas supply branched flow path is the second premixing chamber; and
an opening of the tip of the second combustion-supporting gas supply branched flow path is an opening of the second premixing chamber.

10. The burner for producing inorganic spheroidized particles according to Claim 9, wherein when the tip of the burner is viewed in plan view, the openings of a plurality of the first premixing chambers are arranged in an annular shape centered on the central axis of the burner on either the inside or the outside of the opening of the raw material powder ejection holes arranged in an annular shape, and the openings of a plurality of the second premixing chambers are arranged in an annular shape centered on the central axis of the burner on the other side.

11. An apparatus for producing inorganic spheroidized particles, comprising:

a burner according to any one of Claims 1 to 10;
a vertical spheroidizing furnace in which the burner for producing inorganic spheroidized particles is connected vertically downward to the top thereof; and
a cyclone and a bag filter provided in a subsequent stage of the spheroidizing furnace.

12. A method for producing inorganic spheroidized particles in which inorganic powder is melted and spheroidized by a burner flame formed by combustion of a fuel gas and a combustion-supporting gas containing oxygen, wherein a substance containing no carbon source is used as the fuel gas.

13. The method for producing inorganic spheroidized particles according to Claim 12, wherein ammonia or hydrogen is used as the fuel gas.

14. The method for producing inorganic spheroidized particles according to Claim 12 or 13, wherein the fuel gas and the combustion-supporting gas are supplied into a plurality of the premixing chambers, mixed in advance, combusted to generate a flame, and the inorganic powder is sent into the flame.

15. The method for producing inorganic spheroidized particles according to Claim 14, wherein when a volume per one premixing chamber is v [$m^3$] and a total flow rate of the fuel gas and the combustion-supporting gas is Q [Nm$^3$/h], the fuel gas and the combustion-supporting gas are supplied into the premixing chamber so as to satisfy the relationship of the following equation (1):

$$5.5 \times 10^{-6} \geqq v/Q \geqq 2.2 \times 10^{-7} \qquad \text{Equation (1).}$$

FIG. 1

FIG. 2

EP 4 035 767 A1

FIG. 3

FIG. 4

FIG. 5

EP 4 035 767 A1

# FIG. 6

EP 4 035 767 A1

FIG. 7

FIG. 8

FIG. 9

FIG. 10

100 (10, 20)

## INTERNATIONAL SEARCH REPORT

| | International application No. |
|---|---|
| | PCT/JP2020/034507 |

**A. CLASSIFICATION OF SUBJECT MATTER**
Int.Cl. B01J2/16(2006.01)i, F23D14/02(2006.01)i, F23D14/48(2006.01)i, F23D14/58(2006.01)i
FI: F23D14/02A, B01J2/16, F23D14/48A, F23D14/58A
According to International Patent Classification (IPC) or to both national classification and IPC

**B. FIELDS SEARCHED**

Minimum documentation searched (classification system followed by classification symbols)
Int.Cl. B01J2/16, F23D14/02, F23D14/48, F23D14/58

Documentation searched other than minimum documentation to the extent that such documents are included in the fields searched

| | |
|---|---|
| Published examined utility model applications of Japan | 1922–1996 |
| Published unexamined utility model applications of Japan | 1971–2020 |
| Registered utility model specifications of Japan | 1996–2020 |
| Published registered utility model applications of Japan | 1994–2020 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2009-198083 A (TAIYO NIPPON SANSO CORP.) 03 September 2009 (2009-09-03), paragraphs [0011]-[0018], [0020]-[0022], fig. 1, 2 | 1–15 |
| Y | MURAI, Ryuichi et al, The radiative characteristics of NH3/N2/02 non-premixed flame on a 10 kW test furnace, Energy Procedia, 2017, vol. 120, pp. 325-332, ISSN 1876-6102, particularly, p. 326, ll. 1-33 | 1–15 |
| Y | JP 2010-509504 A (ADVANCED R F DESIGN LLC) 25 March 2010 (2010-03-25), paragraph [0005] | 1–15 |
| Y | JP 2001-227710 A (TOKYO GAS CO., LTD.) 24 August 2001 (2001-08-24), paragraphs [0042]-[0048], fig. 5 | 2–11 |
| Y | JP 3312228 B2 (NIPPON OXYGEN CO., LTD.) 05 August 2002 (2002-08-05), paragraphs [0003], [0020], [0021], fig. 1, 4 | 6–11 |

☐ Further documents are listed in the continuation of Box C.    ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 13 October 2020 | 27 October 2020 |

| Name and mailing address of the ISA/ | Authorized officer |
|---|---|
| Japan Patent Office 3-4-3, Kasumigaseki, Chiyoda-ku, Tokyo 100-8915, Japan | Telephone No. |

Form PCT/ISA/210 (second sheet) (January 2015)

| INTERNATIONAL SEARCH REPORT | International application No. |
| --- | --- |
| Information on patent family members | PCT/JP2020/034507 |

```
JP 2009-198083 A   03 September 2009   (Family: none)

JP 2010-509504 A   25 March 2010       US 2008/0110750 A1
                                        paragraph [0004]
                                        US 2009/0120414 A1
                                        WO 2008/063967 A2
                                        EP 2102386 A
                                        CA 2669394 A1
                                        MX 2009005063 A

JP 2001-227710 A   24 August 2001      (Family: none)

JP 3312228 B2      05 August 2002       (Family: none)
```

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP SHO58145613 A
- JP 3331491 B
- JP 3312228 B
- JP 331228 A